# EUROPÄISCHE PATENTANMELDUNG

(11) **EP 0 977 166 A2**
(43) Veröffentlichungstag der Anmeldung: **02.02.2000**
(21) Anmeldenummer: 99113386.9
(22) Anmeldetag: 10.07.1999
(51) Int. Cl.: G09F 3/10

(54) **Etikett**

(30) Priorität: 28.07.1998 DE 19833957
(71) Anmelder: SCHREINER ETIKETTEN UND SELBSTKLEBETECHNIK GMBH & CO., 85764 Oberschleissheim (DE)
(72) Erfinder: Reichel, Götz, 91217 Hersbruck (DE); Schreiner, Helmut, 85757 Karlsfeld (DE)
(74) Vertreter: Kehl, Günther, Dipl.-Phys.

(57) **Zusammenfassung**

Etikett, das ein Vorderseitenteil 3, ein Trägerteil 1, auf dem ein Gegenstand befestigt werden kann, und vorzugsweise ein Rückseitenteil 4 aufweist. Das Vorderseitenteil 3 und das vorzugsweise vorgesehene Rückseitenteil 4 können trotz des auf dem Trägerteil 1 befestigten Gegenstandes 2 bedruckt werden. Zum Gebrauch des Etiketts wird das Trägerteil 1 mit dem Gegenstand 2 auf das Vorderseitenteil 3 geklebt, wonach das Rückseitenteil 4 ebenfalls umgefaltet und festgeklebt wird. Das Etikett eignet sich vorzüglich als Warensicherungsetikett und kann auf seiten des Etikettenbenutzers nachbedruckt werden.

## Beschreibung

Die Erfindung bezieht sich auf das Gebiet der Etiketten.

Während Etiketten vor einiger Zeit von den Etikettenherstellern in der Regel in vollständig bedrucktem Zustand an die Benutzer, d.h. an die Hersteller oder Händler der mit den Etiketten auszuzeichnenden Waren, ausgeliefert worden sind, besteht heutzutage auf Seiten der Benutzer (Warenhersteller und Händler) häufiger das Bedürfnis, die Etiketten zumindest teilweise selbst zu beschriften. In der Regel werden zu einer solchen "Nachbedruckung" von einem Computer gesteuerte einfache Tintenstrahldrucker oder Thermotransferdrucker verwendet. Der Hersteller oder Händler der Waren kann somit eine individuelle Beschriftung des Etiketts, beispielsweise eine Artikelnummer, eine Preisangabe oder eine Größenangabe auf dem Etikett anbringen.

Etiketten, die an Waren angebracht werden, sollen auch häufig verschiedene Gegenstände enthalten, die an den Endverbraucher übergeben werden sollen. Beispielsweise werden häufig in Etiketten Lotterielose oder Sammelgegenstände, wie etwa Münzen, eingeschlossen und an den Verbraucher übermittelt. Häufig sollen Etiketten auch elektronische Schaltkreise, Antennen, magnetische Elemente und/oder Transponder enthalten, die als sogenannte elektronische Artikelsicherung dienen. Durch derartige Einrichtungen kann eine Quellensicherung der Ware, d.h. eine Sicherung der Ware gegen Diebstahl ab dem Herstellerwerk erreicht werden.

Durch das Anbringen derartiger Gegenstände an dem Etikett wird jedoch die Oberfläche des Etiketts uneben, so daß das Etikett nicht mehr mit einem Drucker in der oben beschriebenen Weise nachbedruckt werden kann, selbst dann nicht wenn sich der Gegenstand auf der Unterseite des Etiketts befinden sollte, da die durch den Gegenstand verursachten Dickenunterschiede des Etiketts Probleme beim Nachbedrucken verursachen oder das Nachbedrucken gänzlich unmöglich machen.

Vor diesem Hintergrund liegt der Erfindung die Aufgabe zugrunde, ein Etikett zu schaffen, das einen unebenen Gegenstand aufnehmen kann und gleichwohl zumindest stellenweise auf seiten des Etikettenbenutzers nachbedruckt werden kann.

Diese Aufgabe ist erfindungsgemäß dadurch gelöst, daß das Etikett ein angelenktes, umfaltbares Trägerteil aufweist, das einen Gegenstand aufnehmen kann. Die Lösung der Erfindung sieht vor, daß der unebene Gegenstand auf einem Trägerteil angebracht wird. Die Nachbeschriftbarkeit oder Nachbedruckbarkeit des Hauptteils des Etiketts wird durch den auf dem Trägerteil angeordneten Gegenstand nicht beeinträchtigt. Nach der Beschriftung wird das Trägerteil auf das Hauptteil umgefaltet, derart daß der auf dem Trägerteil angeordnete Gegenstand zwischen dem Trägerteil und dem Hauptteil des Etiketts eingeschlossen wird. Das Etikett kann dabei besonders vorteilhaft an einem länglichen, stabförmigen oder drahtförmigen Warenteil, wie beispielsweise einem Brillenbügel, oder einer Stofflasche befestigt werden, wobei das längliche Warenteil von dem Etikett umschlossen wird, so daß eine sichere Verbindung zwischen dem Etikett und dem länglichen Warenteil entsteht. Mit dem erfindungsgemäßen Etikett ist eine besonders kostengünstige Lösung geschaffen, da einerseits eine Diebstahlsicherung als auch andererseits ein nachbeschriftbares Etikett in einem Zug hergestellt werden kann.

Nach einer besonders vorteilhaften Ausgestaltung der Erfindung umfaßt das Etikett ein Vorderseitenteil und ein an diesem angelenktes, auf das Vorderseitenteil umklappbares Rückseitenteil, wobei das Trägerteil an dem Vorderseitenteil oder dem Rückseitenteil angelenkt ist und zwischen das Vorderseitenteil und das Rückseitenteil eingeklappt werden kann. Bevor die Teile wie erwähnt umgeklappt werden, können sowohl das Vorderseitenteil als auch das Rückseitenteil in beliebiger Weise mit einem Thermotransferdrucker oder Tintenstrahldrucker nachbedruckt werden, ohne daß die genannten Drucker in ihrer Funktion durch einen auf dem Trägerteil angeordneten unebenen Gegenstand beeinträchtigt werden. Nach dem Umklappen des Trägerteils wird dieses zusammen mit dem Gegenstand von dem Vorderseitenteil und dem Rückseitenteil umschlossen, so daß der Gegenstand zwischen den beiden Teilen sicher verwahrt wird.

Nach einer weiteren vorteilhaften Ausgestaltung der Erfindung sind das Vorderseitenteil, das Rückseitenteil und das Trägerteil in einer Reihe angeordnet. Sie durchlaufen nacheinander den Nachbeschriftungsdrucker. Der Nachbeschriftungsdrucker ist nur dann aktiviert, wenn er von dem Vorderseitenteil und/oder dem Rückseitenteil durchlaufen wird, während er in der Phase, in der das Trägerteil durch den Nachbeschriftungsdrucker läuft, passiv bleibt. Der auf dem Trägerteil angeordnete Gegenstand verursacht daher keine Störung.

Als besonders vorteilhaft hat sich auch eine Ausführungsform erwiesen, bei der das Trägerteil über ein (schmales) Halsteil angelenkt ist. Das gleiche gilt für eine Ausführungsform, bei der alternativ oder ergänzend hierzu das Vorderseitenteil über sein solches Halsteil an das Rückseitenteil angelenkt ist. In beiden Fällen wird beim Zusammenfalten des Etiketts ein Bügel gebildet, der um einen länglichen Teil der Ware, wie beispielsweise ein Brillenbügel, geschlagen werden kann, um so das Etikett gemäß der Erfindung an der Ware zu befestigen.

Wenn das Etikett gemäß einer weiteren vorteilhaften Ausführungsform mit Haftklebstoff beschichtet ist, kann das Etikett nach dem Zusammenfalten nicht mehr - ohne Zerstörung - von der Ware entfernt werden. Ein Austausch des Etiketts oder sonstige Manipulationen sind damit sicher verhindert.

Im Bereich des Halsteils kann - entsprechend einer weiteren vorteilhaften Ausführungsform - das Etikett nichtklebend ausgeführt sein, so daß dieser mit der Ware in Berührung kommende Teil des Etiketts die Ware nicht mit Klebstoff beschmutzt. Dabei kann der nichtklebende Bereich des Halsteils in bekannter Weise dadurch erzeugt werden, daß auf das Etikett der Klebstoff selektiv, beispielsweise mit einer Druckwalze, so aufgetragen wird, daß der Bereich des Halsteils in dem gewünschten Umfang von dem Klebstoffauftrag ausgenommen wird. Wenn zur Herstellung des Etiketts mit Klebstoff vorbeschichtete Materialien verwendet werden, kann der nichtklebende Bereich des Halsteils auch dadurch erzeugt werden, daß das Etikett im Bereich des Halsteils mit einer die Klebewirkung aufhebenden Materialschicht , wie beispielsweise einer Druckfarbe, bedruckt oder überzogen wird.

Wie oben bereits erläutert, können verschiedene (kleine) Gegenstände auf dem Trägerteil angeordnet werden, ohne daß hierdurch die Bedruckbarkeit des Etiketts beeinträchtigt wird. Gemäß einer besonders vorteilhaften Ausführungsform der Erfindung ist vorgesehen, auf dem Trägerteil ein elektronisches Artikelsicherungselement, wie beispielsweise ein Akustomagnetelement, anzubringen. Die Eigenschaft des Etiketts, an einer Ware so angebracht werden zu können, daß ein unbemerktes Entfernen des Etiketts praktisch unmöglich ist, verbunden mit der Anbringung eines Artikelsicherungselements macht das erfindungsgemäße Etikett zu einem vorzüglichen Warensicherungsetikett, das außerdem den Vorteil der nahezu uneingeschränkten Nachbeschriftbarkeit auf Seiten des Etikettenbenutzers aufweist.

Um das oben beschriebene Umfalten des Vorderseitenteils auf das Rückseitenteil zu erleichtern, hat es sich als vorteilhaft erwiesen, wenn zwischen den beiden Teilen eine Perforation als "Sollfalzlinie" vorgesehen wird.

Vorteilhaft ist ferner, wenn als Etikettengrundmaterial ein reißfestes Material, insbesondere ein faserverstärktes Material eingesetzt wird, insbesondere dann wenn das Etikett als Warensicherungsetikett verwendet wird.

Die Erfindung wird im folgenden an Hand der in den Figuren schematisch dargestellten Ausführungsbeispiele näher erläutert. Die Zeichnungen sind nicht maßstabsgetreu, vielmehr sind in den Schnittdarstellungen die Schichtdicken im Verhältnis zu den anderen Abmessungen aus Gründen der deutlicheren Darstellung stark vergrößert.

Es zeigt:
- Figur 1:: Ein Etikett gemäß der Erfindung, das mit einem Gegenstand versehen ist, gemäß einer ersten Ausführungsform, gesehen von der mit Klebstoff beschichteten Seite.
- Figur 2:: Das Etikett aus Figur 1, gesehen von der Frontseite.
- Figur 3:: Ein Etikett gemäß der Erfindung nach einer weiteren Ausführungsform, gesehen von der mit Klebstoff beschichteten Seite.
- Figur 4:: Ein Etikett gemäß einer besonders bevorzugten Ausführungsform der Erfindung, gesehen von der mit Klebstoff beschichteten Seite.
- Figur 5:: Das Etikett aus Figur 4, gesehen von der Frontseite.
- Figur 6:: Das Etikett aus Figur 5 im Schnitt längs der Schnittlinie VI-VI.
- Figur 7:: Das Etikett aus Figur 6 in zusammengefaltetem Zustand.
- Figur 8:: Das Etikett aus den Figuren 4 bis 7, befestigt an dem Bügel einer Brille.
- Figur 9:: Ein Etikett gemäß der Erfindung gemäß einer weiteren Ausführungsform, gesehen von der mit Klebstoff beschichteten Seite.
- Figur 10:: Ein Etikett gemäß der Erfindung gemäß einer weiteren Ausführungsform, gesehen von der mit Klebstoff beschichteten Seite

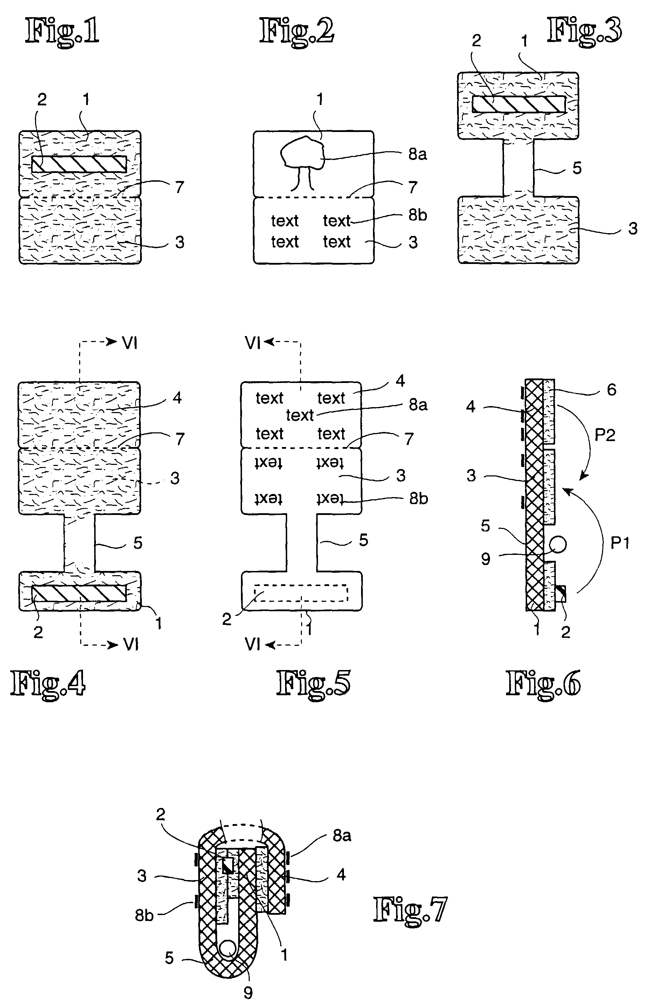

Figur 1 zeigt ein erstes Ausführungsbeispiel der Erfindung. Das Etikett der Figur 1 umfaßt ein Vorderseitenteil 3, an dem ein Trägerteil 1 befestigt ist. Zwischen dem Trägerteil 1 und dem Vorderseitenteil 3 ist eine Perforationslinie 7 vorgesehen, die das Umfalten des Trägerteils 1 erleichtert. Sowohl das Vorderseitenteil 3 als auch das Trägerteil 1 sind mit Haftklebstoff beschichtet. Auf dem Trägerteil 1 ist ein Gegenstand 2 befestigt, bei dem es sich bei dem Beispiel um ein elektronisches Artikelsicherungselement handelt.

Figur 2 zeigt das Etikett von der "anderen Seite", d.h. von der Frontseite. Das Etikett weist einen Aufdruck 8a auf, der üblicherweise vom Hersteller des Etiketts im Buchdruck oder Siebdruck angebracht wird, bevor auf der entgegengesetzten Seite der Gegenstand 2 auf der Haftklebstoffschicht befestigt wird. Das so vorbereitete Etikett gelangt in diesem Zustand an einen Etikettenbenutzer, d.h. an einen Hersteller von Waren oder einen Händler, der das Etikett zur Kennzeichnung seiner Waren verwendet. Der Benutzer des Etiketts kann die Etiketten beispielsweise mit einem Tintenstrahl- oder Thermotransferdrucker auf dem Vorderseitenteil 3 nach Belieben nachbeschriften oder nachbedrucken, beispielsweise mit einer fortlaufenden Seriennummer oder sonstigem Text. Der durch Nachbedrucken angebrachte Aufdruck ist in Figur 2 mit dem Bezugszeichen 8b gekennzeichnet.

Zum Gebrauch des Etiketts wird dieses beispielsweise um einen stabförmigen, fadenförmigen oder drahtförmigen Teil einer Ware geschlagen, wobei die beiden in Figur 1 gezeigten mit Haftklebstoff versehenen Flächen gegeneinander gepreßt werden.

Dabei wird das elektronische Artikelsicherungselement 2 zusammen mit dem Warenteil eingeschlossen, so daß das Etikett mit seinem elektronischen Artikelsicherungselement fest an dem Warenteil haftet.

Bei dem Grundmaterial des Etiketts handelt es sich um einen faserverstärkten Kunststoff, so daß das Etikett jedenfalls nicht ohne Zuhilfenahme von Werkzeugen zerstört werden kann.

Das Etikett der Figur 3 unterscheidet sich von dem Etikett der Figuren 1 und 2 dadurch, daß das Vorderseitenteil 3 mit dem Trägerteil 1 über ein Halsteil 5 verbunden ist. Das Halsteil 5 ist weitgehend nichtklebend. Dies ist dadurch erreicht worden, daß im Bereich des Halsteils 5 der auf der ganzen Folie vorhandene Klebstoff mit einer Druckfarbe überdeckt worden ist, die die Wirkung des Haftklebstoffs aufhebt. Ansonsten ist der Aufbau des Etiketts der Figur 3 der gleiche wie der Aufbau des Etiketts der Figuren 1 und 2, so daß zur Vermeidung von Wiederholungen insoweit auf die Figuren 1 und 2 Bezug genommen werden kann. Das Etikett aus Figur 3 kann vorzüglich an dem Bügel einer Brille befestigt werden. Die Länge des Halsteils 5 ist dabei so bemessen, daß dieses den Bügel der Brille eng umschließt, so daß es nicht über die (verstärkten) Bügelenden abgezogen werden kann. Dadurch, daß das Halsteil 5 weitgehend frei von Klebstoff ist, wird vermieden, daß der Bügel der Brille mit Klebstoff in Berührung kommt.

Figur 4 zeigt eine besonders bevorzugte Ausführungsform der Erfindung. Das in Figur 4 von der klebstoffbeschichteten Seite gezeigte Etikett weist ein Rückseitenteil 4 auf, das mit einem Vorderseitenteil 3 verbunden ist. Zwischen beiden Teilen ist zur Erleichterung des Umklappens des Rückseitenteils eine Perforation 7 vorgesehen. Das Vorderseitenteil 3 geht in ein Halsteil 5 über, an dem ein Trägerteil 1 befestigt ist. Die in Figur 4 dem Betrachter zugekehrte Seite des Etiketts ist außer im Bereich des Halsteils 5 mit Haftklebstoff beschichtet. Auf dem Trägerteil 1 ist ein elektronisches Artikelsicherungselement 2 angeordnet, das dort durch die Wirkung des Haftklebstoffs gehalten wird.

Figur 5 zeigt das Etikett aus Figur 4 von der entgegengesetzten, d.h. von der Frontseite gesehen. Das elektronische Artikelsicherungselement 2 ist in diesem Fall verdeckt und daher strichliert gezeichnet. Das in den Figuren 4 und 5 gezeigte Etikett kann auf seiten des Etikettenbenutzers mit einem Thermotransferdrucker bedruckt (nachbedruckt) werden. Die auf einer Trägerbahn angeordneten Etiketten durchlaufen den Thermotransferdrucker in der Weise, daß zuerst das Rückseitenteil 4, dann das Vorderseitenteil 3 bedruckt wird und im Anschluß daran das Trägerteil 1 den Thermotransferdrucker durchläuft, wobei dieser deaktiviert ist. Der Aufdruck auf dem Rückseitenteil 4 ist mit dem Bezugszeichen 8a, der Aufdruck auf dem Vorderseitenteil 3 ist mit dem Bezugszeichen 8b bezeichnet.

Das Etikett aus den Figuren 4 und 5 ist in Figur 6 im Schnitt gezeigt. In Figur 6 ist das Rückseitenteil 4, das Vorderseitenteil 3, das Halsteil 5 sowie das Trägerteil 1 zu erkennen. Auf dem Rückseitenteil befinden sich der Aufdruck 8a, der durch schwarze Striche angedeutet sind. Auf dem Vorderseitenteil 3 befindet sich der Aufdruck 8b, der ebenfalls durch Striche angedeutet sind. Auf der entgegengesetzten Seite sind Schichten 6 aus Haftklebstoff zu erkennen. Auf der Haftklebstoffschicht 6 haftet im Bereich des Trägerteils 1 das elektronische Artikelsicherungselement 2.

Zum Gebrauch des Etiketts wird das Trägerteil 1 mit dem elektronischen Artikelsicherungselement 2 um ein Warenteil 9 in Richtung des Pfeiles P1 auf die Haftklebstoffschicht 6 des Vorderseitenteils 3 umgebogen, so daß sich die beiden Haftklebstoffschichten miteinander verbinden und das elektronische Artikelsicherungselement 2 einschließen. Daraufhin wird das Rückseitenteil 4 längs des Pfeiles P2 auf das Trägerteil 1 umgefaltet, wo es durch die Wirkung der Haftklebstoffschicht 6 haftet.

Das zusammengefaltete Etikett ist in Figur 7 gezeigt. Wegen der stark vergrößerten Schichtdicken können in Figur 7 auch die Längenverhältnisse des Etiketts nicht maßstabsgetreu wiedergegeben werden. Das in Figur 7 gezeigte Etikett ist an dem Warenteil 9 durch das Halsteil 5 befestigt. Es enthält in seinem Innern das elektronische Artikelsicherungselement 2 und ist auf den nach außen weisenden Seiten des Vorderseitenteils 3 sowie des Rückseitenteils 4 benutzerseitig mit einem Thermotransferdrucker bedruckt. Da der Druck vor dem Zusammenfalten aufgebracht worden ist, ist er trotz der durch das elektronische Artikelsicherungselement hervorgerufenen Unebenheiten in einwandfreier Qualität aufgebracht.

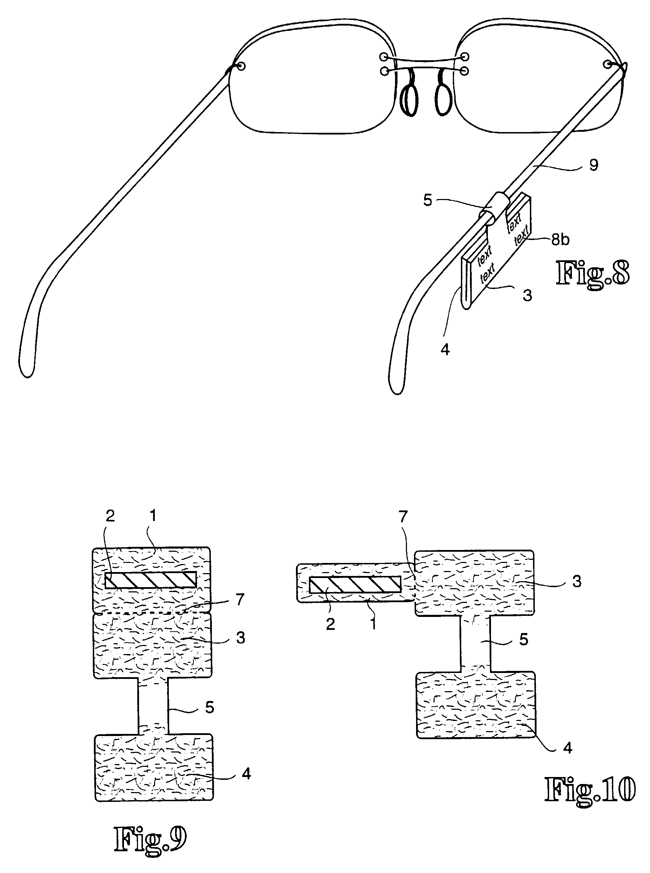

Figur 8 zeigt in perspektivischer Ansicht das an einer Brille befestigte Etikett gemäß der Erfindung. Das Etikett umschließt mit seinem Halsteil 5 eng den Brillenbügel 9, so daß es nicht über das verdickte Ende des Bügels 9 abgestreift werden kann. Die innen liegende Seite des Halsteils 5 ist klebstofffrei, so daß kein Klebstoff auf den Bügel 9 der Brille gelangt. Zu beiden Seiten des Etiketts sind die Aufdrucke 8a und 8b für den Kunden erkennbar. Das Etikett enthält unsichtbar das elektronische Artikelsicherungselement 2. Wenn versucht wird, die Brille zu entwenden, wird durch das elektronische Artikelsicherungselement ein Alarm ausgelöst.

Figur 9 zeigt eine weitere Ausführungsform des erfindungsgemäßen Etiketts. Die Ausführungsform aus Figur 9 unterscheidet sich von dem an Hand der Figuren 4 bis 8 erläuterten Etikett dadurch, daß das Halsteil 5 zwischen dem Vorderseitenteil 3 und dem Rückseitenteil 4 angeordnet ist, während das Trägerteil 1 mit dem Gegenstand 2 an dem Vorderseitenteil 3 über eine Perforation 7 angelenkt ist. Ansonsten ist der Aufbau gleich wie bei dem unter Bezugnahme auf die Figuren 4 bis 8 beschriebenen Etikett, so daß insoweit auf diese Figuren Bezug genommen wird.

Zum Gebrauch des in Figur 9 gezeigten Etiketts wird zunächst das Trägerteil 1 um die Perforationslinie 7 auf das Vorderseitenteil 3 geklappt und mit diesem verklebt, so daß der Gegenstand 2 zwischen dem Vorderseitenteil 3 und dem Trägerteil 1 eingeschlossen wird. Das Halsteil 5 wird um ein Warenteil geschlagen und das Rückseitenteil 4 wird auf das nunmehr auf dem Vorderseitenteil 3 liegende Trägerteil 1 geklebt.

Figur 10 zeigt eine weitere Ausführungsform des erfindungsgemäßen Etiketts. Die Ausführungsform der Figur 10 unterscheidet sich von der Ausführungsform der Figur 9 dadurch, daß das Trägerteil 1 seitlich in bezug auf das Vorderseitenteil 3 angeordnet ist. Das Etikett der Figur 10 kann so verarbeitet werden, daß das Vorderseitenteil 3 und das Rückseitenteil 4 eine Druckeinrichtung durchlaufen und an den in Figur 10 unten liegenden Seiten bedruckt werden, während das Trägerteil 1 mit dem auf diesem angeordneten Gegenstand 2 an der Druckeinrichtung seitlich vorbeigeführt wird. Die Ausführungsform der Figur 10 ist daher für Fälle geeignet, in denen ein Gegenstand 2 mit einer größeren Dicke verarbeitet werden soll.

Beim Gebrauch des in Figur 10 gezeigten Etiketts wird zunächst das Trägerteil 1 mit dem auf diesem angeordneten Gegenstand 2 auf das Vorderseitenteil 3 längs der Perforationslinie 7 umgeklappt und mit dem Vorderseitenteil 3 so verklebt, daß der Gegenstand 2 zwischen dem Trägerteil 1 und dem Vorderseitenteil 3 eingeschlossen ist. Danach wird ebenso wie bei dem Etikett der Figur 9 das Halsteil 5 um ein Warenteil geschlagen und daraufhin das Rückseitenteil 4 mit dem auf das Vorderseitenteil 3 geschlagenen Trägerteil 1 sowie wie mit dem verbleibenden unbedeckten Rand des Vorderseitenteils 3 verklebt.

## Patentansprüche

1. Etikett, dadurch gekennzeichnet, daß es ein angelenktes, umfaltbares Trägerteil (1) aufweist, das einen Gegenstand (2) aufnehmen kann.

2. Etikett nach Anspruch 1, dadurch gekennzeichnet, daß es ein Vorderseitenteil (3) und ein an diesem angelenktes, auf das Vorderseitenteil (3) umklappbares Rückseitenteil (4) aufweist und daß das Trägerteil (1) an dem Vorderseitenteil (3) oder dem Rückseitenteil (4) angelenkt ist und zwischen das Vorderseitenteil (3) und das Rückseitenteil (4) eingeklappt werden kann.

3. Etikett nach Anspruch 2, dadurch gekennzeichnet, daß das Vorderseitenteil (3), das Rückseitenteil (4) und das Trägerteil (1) in einer Reihe angeordnet sind.

4. Etikett nach einem der Ansprüche 1 bis 3, dadurch gekennzeichnet, daß das Trägerteil (1) über ein Halsteil (5) angelenkt ist.

5. Etikett nach Anspruch 2, dadurch gekennzeichnet, daß das Vorderseitenteil (3) über ein Halsteil (5) an das Rückseitenteil (4) angelenkt ist.

6. Etikett nach einem der Ansprüche 1 bis 5, dadurch gekennzeichnet, daß das Trägerteil (1) zumindest teilweise mit Haftklebstoff (6) beschichtet ist.

7. Etikett nach Anspruch 2, dadurch gekennzeichnet, daß das Vorderseitenteil (3) und/oder das Rückseitenteil (4) zumindest teilweise mit Haftklebstoff (6) beschichtet sind.

8. Etikett nach Anspruch 4 oder 5, dadurch gekennzeichnet, daß das Halsteil (5) zumindest teilweise nichtklebend ist.

9. Etikett nach einem der Ansprüche 1 bis 8, dadurch gekennzeichnet, daß es mindestens einen Flächenbereich aufweist, der mit einem Thermotransferdrucker oder einem Tintenstrahldrucker nachbedruckbar ist.

10. Etikett nach einem der Ansprüche 1 bis 9, dadurch gekennzeichnet, daß der Gegenstand (2) ein elektronisches Artikelsicherungselement, insbesondere ein Akustomagnetelement ist.

11. Etikett nach Anspruch 2, dadurch gekennzeichnet, daß zwischen dem Vorderseitenteil (3) und dem Rückseitenteil (4) eine Perforation (7) vorgesehen ist.

12. Etikett nach einem der Ansprüche 1 bis 11, dadurch gekennzeichnet, daß es aus einem reißfesten Material gefertigt ist.

13. Etikett nach einem der Ansprüche 1 bis 12, dadurch gekennzeichnet, daß das Material ein faserverstärktes Material ist.
